# EUROPEAN PATENT APPLICATION

(11) **EP 3 385 113 A1**
(43) Date of publication of application: **10.10.2018**
(21) Application number: 17164630.0
(22) Date of filing: 03.04.2017
(51) Int. Cl.: B60N 2/02, B64D 11/06

(54) **A DRIVE UNIT FOR A VEHICLE SEAT**

(71) Applicant: Adient US LLC, Plymouth MI 48170 (US)
(72) Inventor: KREUTZ, Wolfgang, 66879 Reichenbach-Steegen (DE)
(74) Representative: Finger, Catrin

(57) **Abstract**

The present invention refers to a drive unit (D to D8) comprising a protection housing (20). Further, the present invention refers to a seat (1) for a vehicle, in particular to an aircraft passenger seat or to any other of a passenger and automotive seat.

## Description

### FIELD OF INVENTION

The present invention refers to a drive unit for a vehicle seat, comprising a protection housing. Further, the present invention refers to a seat for a vehicle, in particular to an aircraft passenger seat or to any other of a passenger and automotive seat.

### DESCRIPTION OF THE RELATED ART

For example, DE Pat. No. 10 2013 212 538 describes an electric motor, in particular for an air conditioning system of a motor vehicle. The electric motor comprises a drive unit with a stator, a rotor and permanent magnets, and a control unit for controlling and controlling the drive unit. Further, the electric motor is characterized in that the rotor of the drive unit has a metal-plastic connection.

The German Patent 4 101 470 defines a car seat adjuster which consists of a threaded spindle, at whose one end is a connector, and on which a spindle nut is rotatably fitted in a housing, connected to a drive.

### SUMMARY OF THE INVENTION

The present invention seeks to improve a drive unit comprising a protection housing, an adjusting device comprising such a drive unit. Further, the present invention seeks to improve a seat for a vehicle, in particular for an aircraft passenger seat. Although embodiments of the invention will be described with respect to application to aircraft, it is not limited to such applications.

The object is achieved by a drive unit according to claim 1. Further, the object is achieved by a seat according to claim 10.

Preferred embodiments are given in the dependent claims.

The disclosure provides a drive unit comprising a protection housing, wherein the protection housing comprises at least two encapsulating sheaths. Further, at least one of an inner sheath is made of plastic material and an outer sheath is configured as a grounded encapsulating sheath. In particular, the grounded encapsulating sheath is a metallic sheath and/or is formed by a metal plate. For example, the grounded encapsulating sheath comprises light metal material, in particular aluminium.

The grounded metallic sheath can be manufactured by an injection molding method, in particular by a metal injection molding method.

The grounded encapsulating sheath of the protection housing provides compliance of latest safety regulations. Further, the grounded encapsulating sheath provided by the drive unit provides compliance of a degree of protection provided against intrusion, dust, accidental contact and water. In particular, the present protection housing of the drive unit is configured as a mechanical casing and an electrical enclosure.

Moreover, the protection housing provides compliance of the International Protection Marking Code IP54, IEC standard 60529, providing the first digit 5 describing a solid particle protection and the second digit 4 describing a liquid ingress protection. Further, the so-called NEMA rating (short for: National Electrical Manufacturers Association) defining NEMA enclosure types in NEMA standard number 250, IEC 60529 IP code, is accomplished. Especially, a compliance of the NEMA enclosure 12, 12K, 13 can be achieved.

In addition, a mechanical reinforcement and stability of the drive unit can be substantially increased, for example against vibrations caused by an operating vehicle and/or aircraft. In particular, a service life can be substantially increased.

Furthermore, the protection housing provides electromagnetic compatibility so that unwanted effects, for example caused by electromagnetic interferences can be substantially avoided.

Moreover, a compliance of emission standards and UL 94, the Standard for Safety of Flammability of Plastic Materials for Parts in Devices and Appliances, will be accomplished by the exemplary embodiment of the drive unit, in particular of the protection housing. Therefore, the present invention is applicable to the aircraft seat or any other passenger and automotive seat.

According to a further exemplary embodiment, a gap is provided between the inner sheath and the grounded outer sheath of the protection housing. Further, at least one supporting element is provided in the gap to provide a support for the inner sheath within the grounded encapsulating outer sheath. In particular, the inner sheath is distanced from the grounded outer sheath by the supporting element. For example, the support element is made of plastic material and/or metal so that a motor and/or actuator within the drive unit are/is stabilized against mechanical vibrations. Moreover, a noise reduction can be achieved by the application of the support element between the encapsulating sheaths.

In another embodiment, the plastic inner sheath and the grounded metallic outer sheath and/or the support element provided by the outer sheath can be manufactured by an insert-molding method.

In another exemplary embodiment, each of the inner and outer sheaths provides at least one aperture providing an application of at least one connecting element. In particular, the connecting element provides a wire and/or a connecting link configured as an electrical and/or mechanical link.

Further, the disclosure provides an adjusting device, in particular a inclination device comprising the exemplary drive unit for a vehicle seat which comprises an adjustable seat support structure. The drive unit is provided to independently drive at least one pivot fitting of the seat support structure in a pivot axis. Further, the drive unit is connected to the pivot fitting by at least one connecting element, wherein the connecting element is guided through at least one aperture provided by a protection housing of the drive unit.

In another exemplary embodiment, the protection housing provides fixation elements for mounting the drive unit to the seat. For example, the fixation elements are provided by at least one of a form-fitted, force-fitted and/or adhesive connection. Additionally or alternatively, the fixation elements are formed by a molding method, for example insert-molding or metal injection molding while molding and shaping the grounded metallic outer sheath.

According to a further aspect of the disclosure, a seat for a vehicle comprises an adjustable seat support structure and an exemplary drive unit. The seat support structure provides a seat pan having a seat pan frame, a backrest having a backrest frame, a leg rest having a leg rest frame, wherein the seat pan, the backrest and the leg rest are articulated with respect to each other such that the seat is positionable into at least one of a taxi, takeoff and landing position (also "TTL" or "TT&L" position called), a comfort inclined position and a sleeping position.

Further, the drive unit is provided to independently pivot at least one of the seat pan, the backrest or the leg rest with respect to each other, wherein the drive unit comprises a protection housing providing at least two encapsulating sheaths. At least one of an inner sheath of the protection housing is made of plastic material and an outer sheath is configured as a grounded encapsulating sheath.

According to a further exemplary embodiment, the backrest is pivotably connected to the seat pan by at least one of a backrest pivot fitting in a backrest pivot axis. Further, the leg rest is pivotably connected to the seat pan by at least one of a leg rest pivot fitting in a leg rest pivot axis.

In an exemplary embodiment, a number of drive units is provided to independently drive the backrest pivot fitting and/or the leg rest pivot fitting. The control unit is provided to independently control at least one of the drive units, wherein the control unit is connected to at least one of the drive units by at least one connecting element which is guided through at least one aperture provided by each of the inner sheath and the grounded encapsulating sheath of the drive unit protection housing.

The control unit is configured to control adjusting movement of at least one of the seat pan, the backrest or the leg rest. The control mechanism provided by the control unit allows that the seat is continuously adjustable in many positions, for example between the TTL position, comfort seating position and sleeping position.

In an exemplary embodiment, the backrest further comprises a shoulder support and/or a headrest. The backrest and the shoulder support are articulated with respect to each other by at least a shoulder support pivot fitting.

According to a further exemplary embodiment, the leg rest is adjustable in length. The length adjustment allows a customized length of the leg rest of different passengers.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1: is a perspective view of a seat with a seat being shown in a in a taxi, takeoff, and landing position and having an upholstery,
- Figure 2: is a perspective view of the seat showing in figure 1 with a number of drive units and without the upholstery,
- Figure 3: is a perspective view of a drive unit and
- Figures 4A to 4C: are perspective views of the drive unit with a protection housing.

Corresponding parts are marked with the same reference symbols in all figures.

### DETAILED DESCRIPTION OF PREFERRED EMBODIMENTS

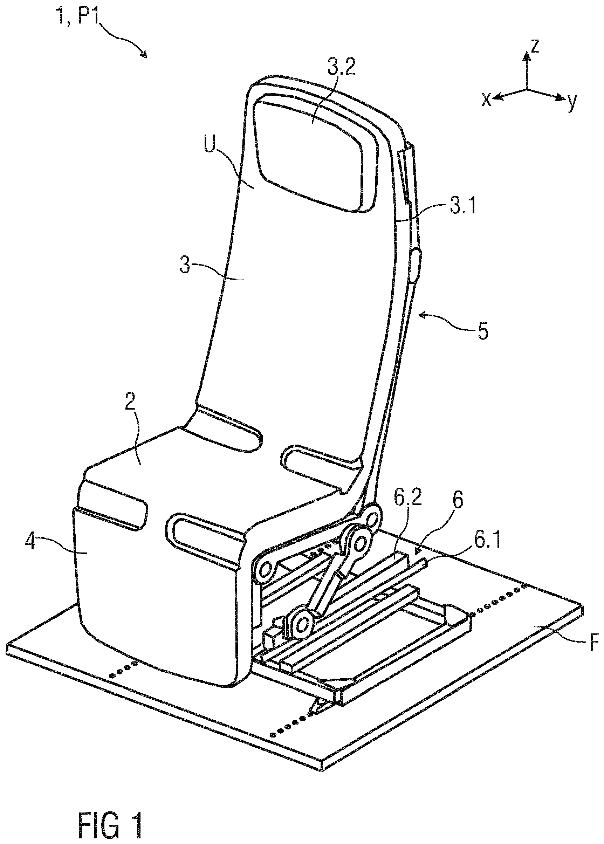

**Figure 1** is a perspective view of the seat 1 having an upholstery U, being in a taxi, takeoff, and landing position P1.

For a better understanding of subsequent descriptions of the seat 1 a coordinate system is shown in further figures. The coordinate system comprises a longitudinal axis x, a transverse axis y and a vertical axis z in relation to the aircraft.

The seat 1 comprises a seat pan 2, a backrest 3 and a leg rest 4. In the shown embodiment the backrest 3 comprises a shoulder support 3.1. In one embodiment, the backrest 3 can comprise additionally or alternatively a headrest 3.2, wherein the backrest 3 shown in figure 1 comprises the headrest 3.2.

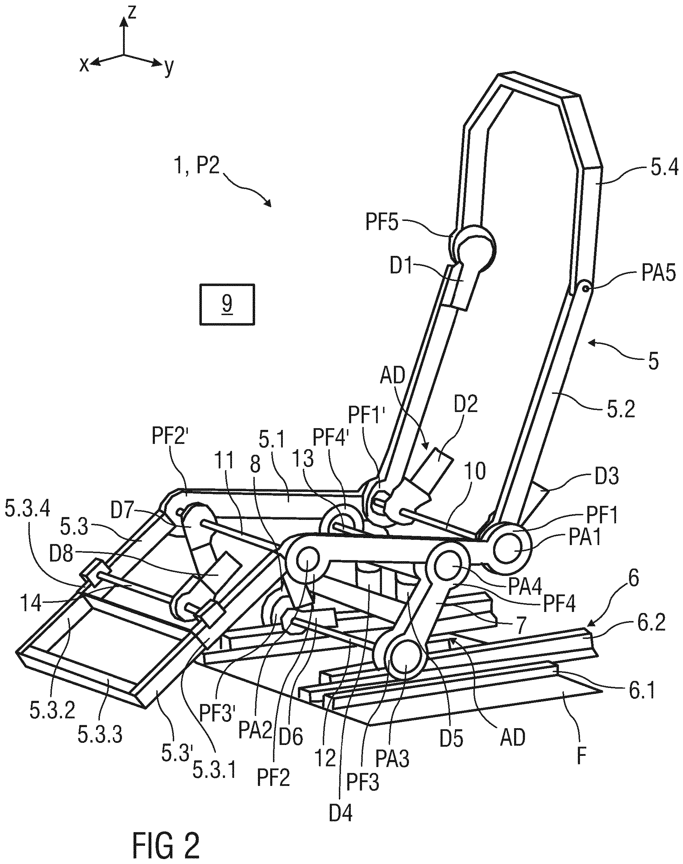

In particular, the seat pan 2, the backrest 3, the leg rest 4 and the shoulder support 3.1 are articulated with respect to each other such that the seat 1 is positionable into at least one of the TTL position P1 and any one of a comfort inclined position P2, wherein one comfort position P2 is shown in figure 2.

Further, the seat 1 comprises a seat support structure 5 which is connected to a base structure 6. In the shown embodiment the seat support structure 5 provides an upholstery U. In one embodiment, the upholstery U comprises at least one of a seat pan upholstery part, a backrest upholstery part and/or a leg rest upholstery part. Alternatively, the upholstery U is provided by a single-piece formed upholstered part. Further, the upholstery U can be at least partially attached to the seat support structure 5 by not further shown force-fitted, adhesive and/or form-fitted connection points.

In one embodiment, the force-fitted, adhesive and/or form-fitted connection can provide hook and loop fastener, clip, engage, snap-in and/or plug-in connection points. In another embodiment the upholstery U comprises a number of upholstered cover elements, wherein the seat support structure 5 can be covered by at least one upholstered cover element. In another example, the upholstery U and the seat support structure 5 can be at least partially bonded together.

The base structure 6 provides a track mechanism for length adjustment of the seat 1. Therefore, the track mechanism provides a length adjuster for the seat 1.

The track mechanism provides a lower track 6.1 fixedly coupled to the aircraft floor F and an upper track 6.2 which is slidable coupled to the lower track 6.1 for a sliding movement in a longitudinal direction of the aircraft.

**Figure 2** is a perspective view of the seat 1 showing in figure 1 without the upholstery U and with a number of drive units D1 to D8. The seat 1 is positioned in one of the many possible comfort inclined positions P2.

The seat support structure 5 provides a seat pan frame 5.1 for the seat pan 2 with two lateral seat pan sides 5.1.1, 5.1.2, wherein only one of the two lateral seat pan sides 5.1.1 is shown in figure 1. Additionally, the seat pan frame 5.1, thereby the seat pan 2, comprise a front seat pan side 5.1.3 and a back seat pan side 5.1.4. The seat pan frame 5.1 is connected to the base structure 6 by a single lever 7, 8 on each of the two lateral seat pan sides 5.1.3, 5.1.4.

Further, the seat support structure 5 comprises a backrest frame 5.2 for the backrest 3 which is pivotably mounted to the back seat pan side 5.1.4 at a backrest pivot axis PA1 (which is understood as an axis parallel to the transverse axis y).

Additionally, a leg rest frame 5.3 for the leg rest 4 is provided by the seat support structure 5, wherein the leg rest frame 5.3 is pivotably mounted to the front seat pan side 5.1.3 at a leg rest pivot axis PA2 (which is understood as an axis parallel to the transverse axis y). In particular, the leg rest 4 is configured as a calf rest.

Moreover, the seat support structure 5 comprises a shoulder support and headrest frame 5.4 which is pivotably mounted to the backrest frame 5.2 at a shoulder support pivot axis PA5. For example, the backrest frame 5.2 and the shoulder support and headrest frame 5.4 are articulated with respect to each other by the shoulder support pivot axis PA5.

According to an exemplary embodiment, the backrest frame 5.2 is pivotably connected to the seat pan frame 5.1 by at least one of a backrest pivot fitting PF1 in the backrest pivot axis PA1. The leg rest frame 5.3 is pivotably connected to the seat pan frame 5.1 by at least one of a leg rest pivot fitting PF2 in the leg rest pivot axis PA2. In particular, each of the pivot fittings PF1, PF2 is provided by a recliner mechanism and thereby comprising recliner fittings.

In the shown embodiment, the backrest pivot axis PA1 is defined by a connecting element 10 pivotably coupling the lateral arranged sides 5.2.1, 5.2.2 of the backrest frame 5.2 with the back seat pan side 5.1.4.

Further, the leg rest pivot axis PA2 of the leg rest frame 5.3 is defined by another connecting element 11 pivotably coupling the lateral arranged sides 5.3.1, 5.3.2 of the leg rest frame 5.3 with the front seat pan side 5.1.3. In particular, the connecting elements 10, 11 are connecting links and/or rods.

The drive units D1 to D8 are provided by an adjusting device AD of the seat 1 for adjusting each of the adjustable seat support structure parts.

The number of drive units D1 to D8 is provided to independently drive the frame parts of the seat support structure 5 and at least one of the pivot fittings PF1 to PF5 of each of the adjustable seat support structure parts.

In the shown embodiment, each of the drive units D2 to D8 are connected to each of the connecting elements 10 to 14 to independently drive the pivot fittings PF1 to PF5.

For example, a single drive unit D1 is provided for the shoulder support pivot fitting PF5 and drive units D2, D3 are provided for the backrest pivot fittings PF1, PF1'.

Further, drive units D4, D5 are provided for the single lever second pivot fittings PF4, PF4' to adjust the inclination movement of the seat pan frame 5.1.

Moreover, a single drive unit D6 is provided for the single lever first pivot fittings PF3, PF3' to adjust the movement in the longitudinal direction and in the vertical direction of the seat pan frame 5.1.

Single drive unit D7 is provided for the leg rest pivot fittings PF2, PF2' and a single drive unit D8 is provided for the leg rest frame 5.3 which is, as shown in the embodiment, adjustable in length. Therefore, the leg rest frame 5.3 comprises an adjustable, in particular extendable and retractable, second leg rest frame 5.3'. The length adjustment allows a customized length of the leg rest frame 5.3 of different passengers.

Further, the control unit 9 is provided to independently control the drive units D1 to D8.

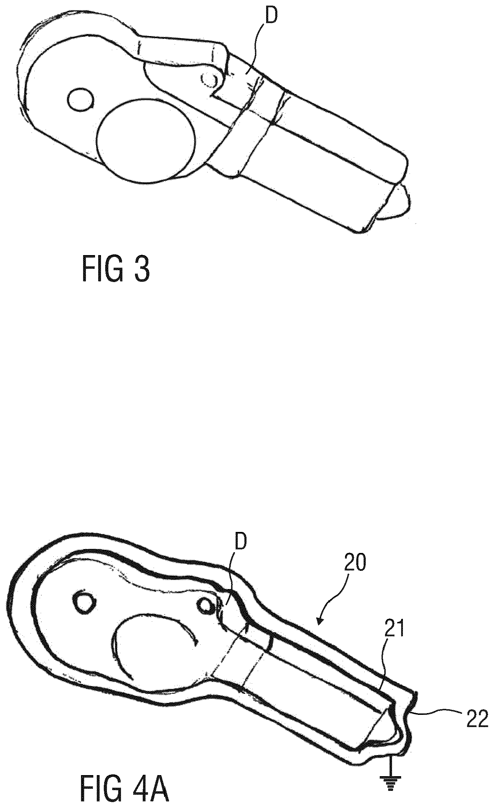

In an exemplary embodiment, each of the drive units D1 to D8 can comprise a protection housing 20, shown and further described in figures 4A to 4C.

**Figure 3** is a perspective view of a drive unit D provided to independently drive the frame parts of the seat support structure 5 and at least one of the pivot fittings PF1 to PF5 of each of the adjustable seat support structure parts.

**Figures 4A to 4C** are perspective views of the drive unit D with the protection housing 20.

The protection housing 20 comprises at least two encapsulation sheaths. In particular, an inner sheath 21 is made of plastic material and an outer sheath is configured as a grounded encapsulating sheath 22.

For example, the grounded encapsulating sheath 22 is a metallic sheath. In another embodiment, the grounded encapsulating sheath 22 is formed by a metal plate. In particular, the grounded encapsulating sheath 22 comprises light metal material, for example aluminium.

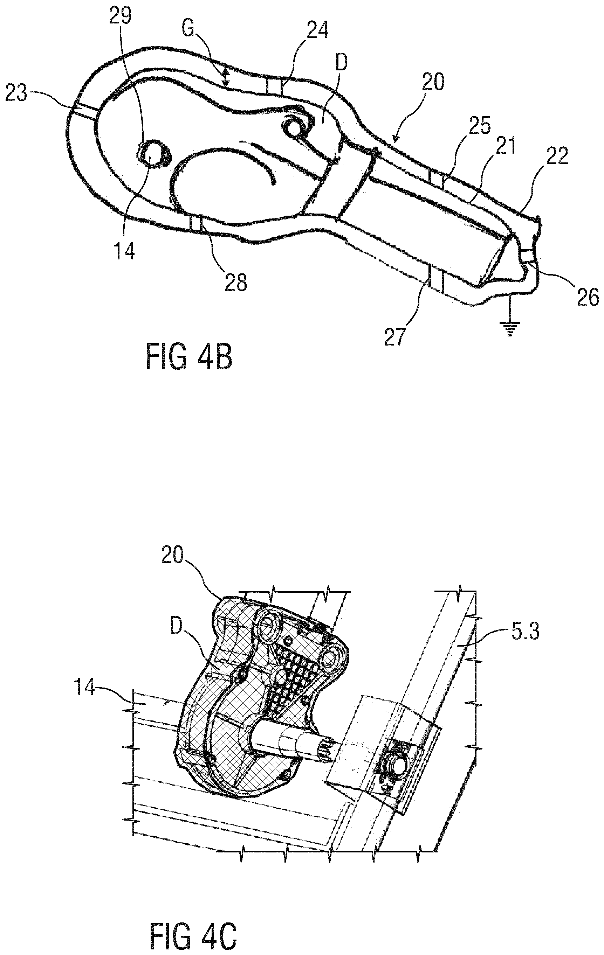

Figure 4B is a sectional view of the drive unit D, showing an exemplary embodiment of the drive unit D with the protection housing 20.

The grounded encapsulating sheath 22 is distanced from the plastic inner sheath 21 by a gap G. In a further embodiment, the gap G provides a cooling system to keep a desired temperature of the drive unit D while operating.

In addition, to mechanically support the inner sheath 21 within the grounded encapsulating sheath 22 a number of support elements 23 to 28 are provided by the protection housing 20. For example, the support elements 23 to 28 are made of plastic material and/or metal so that a motor and/or actuator within the drive unit D are/is stabilized against mechanical vibrations.

Further, each of the encapsulating sheaths of the protection housing 20 comprises an aperture 29 providing an application of any one of the before mentioned connecting elements 10 to 14, wherein the connecting element 14 is shown as an example in the embodiment. In particular, the connecting element 14 provides a wire and/or a connecting link. For example, the control unit 9 is connectable to the drive unit D by a wire which is guided through the aperture 29.

In a further embodiment, the protection housing 20 provides a not further shown fixation element for mounting the drive unit D to the seat 1, for example to the seat support structure 5, in particular to the frame parts of the seat support structure 5. For example, the fixation element is arranged and/or is formed on a protection house side being in a position in relation with a frame part of the seat support structure 5.

Figure 4C is a detailed perspective and enlarged view of the drive unit D having the protection housing 20. In the shown embodiment, the drive unit D is connected to the connecting element 14 of the leg rest frame 5.3, shown in figure 2.

### List of References

- 1: seat
- 2: seat pan
- 3: backrest
- 3.1: shoulder support
- 3.2: headrest
- 4: leg rest
- 5: seat support structure
- 5.1: seat pan frame
- 5.1.1, 5.1.2: lateral seat pan side
- 5.1.3: front seat pan side
- 5.1.4: back seat pan side
- 5.2: backrest frame
- 5.2.1, 5.2.2: lateral arranged side
- 5.3: leg rest frame
- 5.3.1, 5.3.2: lateral arranged side
- 5.3.3: front leg rest frame part
- 5.3.4: back leg rest back frame part
- 5.4: shoulder support and headrest frame
- 5.4.1, 5.4.2: lateral arranged side
- 6: base structure
- 6.1,6.2: track
- 7, 8: single lever
- 9: control unit
- 10 to 14: connecting element
- 20: protection housing
- 21: inner sheath
- 22: grounded encapsulating sheath
- 23 to 28: support element
- 29: aperture
- AD: adjusting device
- D, D1 to D8: drive unit
- F: floor
- G: gap
- P1, P2: TTL position, comfort position
- PA1, PA2: pivot axis
- PA3, PA4: pivot point
- PA5: pivot axis
- PF1 to PF4': pivot fitting
- U: upholstery

## Claims

1. A drive unit (D to D8) comprising a protection housing (20), wherein
- the protection housing (20) comprises at least two encapsulating sheaths (21, 22), and
- wherein at least one of an inner sheath (21) is made of plastic material and an outer sheath is configured as a grounded encapsulating sheath (22).

2. The drive unit (D to D8) according to claim 1, wherein the grounded encapsulating sheath (22) is a metallic sheath.

3. The drive unit (D to D8) according to claim 1 or 2, wherein the grounded encapsulating sheath (22) is formed by a metal plate.

4. The drive unit (D to D8) according to at least one of the preceding claims, wherein the grounded encapsulating sheath (22) comprises light metal material.

5. The drive unit (D to D8) according to at least any one of the preceding claims, wherein the grounded encapsulating sheath (22) is made of aluminium.

6. The drive unit (D to D8) according to at least any one of the preceding claims, wherein a gap (G) is provided between the inner sheath (21) and the grounded encapsulating sheath (22).

7. The drive unit (D to D8) according to claim 6, wherein the gap (G) provides at least one support element (23 to 28).

8. The drive unit (D to D8) according to at least any one of the preceding claims, wherein each of the inner and the outer sheaths of the protection housing (20) provides at least one aperture (29) providing an application of at least one connecting element (10 to 14).

9. The drive unit (D to D8) according to claim 7, wherein the connecting element (10 to 14) provides a wire and/or a connecting link.

10. A seat (1) comprising an adjustable seat support structure (5) and a drive unit (D to D8) according to claims 1 to 9, wherein
- wherein the seat support structure (5) provides
- a seat pan (2) having a seat pan frame (5.1),
- a backrest (3) having a backrest frame (5.2),
- a leg rest (4) having a leg rest frame (5.3),
wherein the seat pan (2), the backrest (3) and the leg rest (4) are articulated with respect to each other such that the seat (1) is positionable into at least one of a taxi, takeoff and landing position (P1), a comfort inclined position and a sleeping position, wherein the drive unit () is provided to independently pivot at least one of the seat pan (2), the backrest (3) or the leg rest (4) with respect to each other, wherein
- the drive unit (D to D8) comprises a protection housing (20) providing at least two encapsulating sheaths (21, 22), and
- wherein at least one of an inner sheath (21) is made of plastic material and an outer sheath is configured as a grounded encapsulating sheath (22).

11. The seat (1) according to claim 10, wherein the backrest (3) is pivotably connected to the seat pan (2) by at least one of a backrest pivot fitting (PF1) in a backrest pivot axis (PA1).

12. The seat (1) according to claim 10 or 11, wherein the leg rest (4) is pivotably connected to the seat pan (2) by at least one of a leg rest pivot fitting (PF2) in a leg rest pivot axis (PA2).

13. The seat (1) according to at least any one of the preceding claims 10 to 12, wherein a number of drive units (D to D8) is provided to independently drive the backrest pivot fitting (PF1) and/or the leg rest pivot fitting (PF2).

14. The seat (1) according to at least any one of the preceding claims 10 to 13, wherein a control unit (9) is provided to independently control at least one of the drive units (D to D8).

15. The seat (1) according to claim 14, wherein the control unit (9) is connected to at least one of the drive units (D to D8) by at least one connecting element (10 to 14) which is guided through at least one aperture (29) provided by each of the inner sheath (21) and the grounded encapsulating sheath (22) of the drive unit protection housing (20).
